# EUROPÄISCHE PATENTSCHRIFT

(11) **EP 3 542 511 B1**
(45) Veröffentlichungstag und Bekanntmachung des Hinweises auf die Patenterteilung: **17.11.2021**
(21) Anmeldenummer: 17804505.0
(22) Anmeldetag: 17.11.2017
(51) Int. Cl.: H04L 29/06, H04L 29/08

(54) **VERFAHREN FÜR EIN KOMMUNIKATIONSNETZWERK UND ELEKTRONISCHE KONTROLLEINHEIT**
PROCESS FOR A COMMUNICATION NETWORK AND ELECTRONIC CONTROL UNIT
PROCESSUS POUR UN RÉSEAU DE COMMUNICATION ET UNITÉ DE COMMANDE ÉLECTRONIQUE

(30) Priorität: 18.11.2016 DE 102016222740
(43) Veröffentlichungstag der Anmeldung: 25.09.2019
(73) Patentinhaber: Continental Automotive GmbH, 30165 Hannover (DE)
(72) Erfinder: ZINNER, Helge, 93049 Regensburg (DE)
(74) Vertreter: Continental Corporation
(86) Internationale Anmeldenummer: PCT/EP2017/079584
(87) Internationale Veröffentlichungsnummer: WO 2018/099736

(56) Entgegenhaltungen:
- EP-A1- 2 892 199
- US-B1- 8 914 406
- Anonymous: "Network switch - Wikipedia", , 14. November 2016 (2016-11-14), XP055441987, Gefunden im Internet: URL:https://en.wikipedia.org/w/index.php?t itle=Network_switch&oldid=749560188 [gefunden am 2018-01-18]
- Anonymous: "Firewall (computing) - Wikipedia", , 9. November 2016 (2016-11-09), XP055441999, Gefunden im Internet: URL:https://en.wikipedia.org/w/index.php?t itle=Firewall_(computing)&oldid=748682460 [gefunden am 2018-01-18]
- Anonymous: "Distributed firewall - Wikipedia", , 20. April 2016 (2016-04-20), XP055442001, Gefunden im Internet: URL:https://en.wikipedia.org/w/index.php?t itle=Distributed_firewall&oldid=716210212 [gefunden am 2018-01-18]

## Beschreibung

Die vorliegende Erfindung betrifft Verfahren für ein Kommunikationsnetzwerk nach dem Oberbegriff des Anspruchs 1 und eine elektronische Kontrolleinheit.

Auf Basis der physikalischen Schicht Ethernet und dem darüber liegenden Internetprotokoll (IP) finden Techniken in Kommunikationsnetze von Fahrzeugen Einzug, die im Rahmen informationstechnischer Systeme schon weit verbreitet sind. Insbesondere im Hinblick auf einen zunehmenden Einsatz der Protokolle Ethernet und Internetprotokoll besteht der Bedarf an weiteren Sicherheitsmechanismen, um Fremdzugriffe unterbinden zu können. Aufgrund wachsender Anwendung von Funktechnologien sowie damit in Zusammenhang stehender offener und standardisierter Protokolle besteht damit im Automobilbereich im Wesentlichen erstmals die Möglichkeit, auf die Kommunikationsnetze eines Fahrzeugs per Fernzugriff zuzugreifen. Beispielsweise wurden Zugriffe auf Fahrzeuge bekannt, bei denen es Angreifer über Funk geschafft haben, sich Zugriff auf ein Fahrzeug zu verschaffen und somit wichtige Fahrzeugfunktionen zu beeinflussen. Andere Industriezweige haben Probleme und Lösungen, welche sich nicht auf das Automobil übertragen lassen, da beispielsweise bei einem Arbeitsplatzrechner eine Firewall schon mit in dem System bereits vorhandenen Daten arbeitet und nicht, wie für Fahrzeuge gefordert, on-the-fly. Zudem können Arbeitsplatzrechner wesentlich einfacher einer Aktualisierung der Sicherheitssoftware unterzogen werden als eine Software im Automobil.

Ein Kommunikationspaket gemäß dem Stand der Technik umfasst üblicherweise Header übergeordneter Schichten eines Protokollstapels einer Sendeeinrichtung. Ein Protokollstapel einer Empfangseinrichtung wird bei Empfang dieses Kommunikationspakets schrittweise vorgehen und dieses mittels vorher definierter Filter untersuchen, um die übertragenen Daten beispielsweise einer entsprechenden Softwareanwendung weiterzuleiten. Zum Beispiel wird ein TCP/IP-Stapel in einem Steuergerät von einem Kommunikationspaket, wie einer Ethernet-Nachricht, durchlaufen und auf der Basis der Analyse des Inhaltes an die entsprechende Applikation geleitet.

Die Komplexität von Protokollstacks steigt mit der Anzahl verwendeter Protokolle erheblich an. Beispielsweise umfasst Audio/Video Bridging (AVB) zur Übertragung und Wiedergabe von Audio- und Videodaten vier Subprotokolle und Time-Sensitive Networking (TSN) sogar 11 Subprotokolle und umfangreiche Spezifikationen. Nachteilig hierbei ist, dass damit keine einfache Nachweisbarkeit für einen deterministischen Protokollstack gegeben ist, da sich aufgrund der Vielzahl verwendeter Protokolle eine sehr große Anzahl an Möglichkeiten der Verzweigung ergeben, die nicht einfach dargestellt werden können. Somit bestehen erhebliche Probleme, vorhandene Sicherheitslücken eines Protokollstacks festzustellen. Fraglich ist beispielsweise, wie vorgegangen werden soll, wenn beabsichtigt oder unbeabsichtigt ein neuer Ethernettyp verwendet wird, der im Zweifelsfalle zur zentralen Recheneinheit geleitet werden würde, wodurch ein kritischer Systemzustand hervorgerufen werden könnte und die Funktionsfähigkeit eines zugrundeliegenden Systems erheblich eingeschränkt und die Sicherheit von Verkehrsteilnehmern gefährdet werden könnte. Mittels einer Denial of Service-Attacke (DoS), welche gezielt nach Sicherheitslücken eines Protokollstacks sucht, könnte so ein gezielter nichtautorisierter Zugriff über vorher nicht gefundene Sicherheitslücken stattfinden.

Nach dem OSI-Modell können Datenpakete sieben Schichten aufweisen. Das Datenpaket ist dabei aus den Nutzdaten und einem Header für jede der Schichten zusammengesetzt. In den Headern ist jeweils eine Verarbeitungsinformation für die zugehörige Schicht gespeichert. Die Schichten enthalten somit jeweils die Nutzdaten, den eigenen Header und die Header der darunterliegenden Schichten. Die Schichten verlassen sich dabei auf eine korrekte Verarbeitung der darunterliegenden Schicht und machen sich deren Arbeit zunutze. Die dritte Schicht bildet beispielsweise die sog. "IP-Schicht", welche die IP-Adressen des Absenders und des Empfängers enthält.

Angriffe auf Kommunikationsnetzwerke können sehr vielfältig ausgestaltet sein. Die Angriffe können dabei einzelne Schichten angreifen und sich den Zugriff auf die dort erhaltenen Informationen zunutze machen. Beispielsweise kann zunächst durch sog. "Sniffing" auf der zweiten Schicht die IP-Adresse der Teilnehmer ermittelt werden und dann durch sog. "Spoofing" die MAC-Tabellen der Dienstnehmer geändert werden, so dass Anfragen an den Dienstgeber nicht mehr korrekt übertragen werden. Daraus entsteht dann ein sog. "Denial of Service Angriff" (DoS), der die Erreichbarkeit von Diensten und/oder Ressourcen einschränkt. Ein Angriff auf höhere Schichten ist dafür gar nicht nötig.

Um jedoch alle Attacken bzw. Angriffe frühzeitig zu erkennen, sollten nicht nur die Header niedrigerer Schichten nach möglichen Fehlern oder Veränderungen durchsucht werden, sondern auch die höheren Schichten und die Nutzdaten. Zudem ist eine tiefe Analyse der Schichten sinnvoll. Je tiefer eine Analyse auf einzelnen Schichten ausgeführt wird, desto mehr Bytes der Schicht müssen durchsucht werden und desto mehr Fehler bzw. potentielle Angriffe können gefunden werden. Die Kombination aus der maximal möglichen zu analysierenden Schicht und den maximal durchsuchbaren Bytes einer Schicht kann als "Suchtiefe" bezeichnet werden. Ein Durchsuchen der Gesamtheit von Daten (Header der Schichten fünf bis sieben und Nutzdaten und/oder ein tiefes Hineinschauen in Schichten) nennt man "Deep Packet Inspection". Je höher die Schichten sind, die durch eine Analyse untersucht werden, und je tiefer in die einzelnen Schichten geschaut wird desto leistungsfähiger muss jedoch die Hard- und Software sein. Dementsprechend wird eine tiefere Analyse und eine Analyse in höheren Schichten auch teurer.

Eine Firewall kann beispielsweise alle Schichten analysieren und somit Angriffe so umfänglich wie möglich erkennen. Mit dem Einzug von Ethernet und Geschwindigkeiten von 100Mbit/s oder zukünftig sogar 1000Mbit/s oder bis zu 10Gbit/s ist die Beherrschbarkeit von Datenströmen mit den bisherigen Controllern jedoch nicht mehr gegeben. Sollte ein DoS-Angriff mit einer derartigen Datenrate stattfinden, dann wären die eingesetzten Firewalls (bzw. die Controller) derart überlastet, dass das Steuergerät zum Erliegen kommen kann.

Allerdings ist es aus Kostengründen nicht vorstellbar, dass auf jedem Steuergerät eine zusätzliche Firewall implementiert werden könnte. Wenn dafür jeweils ein zusätzlicher Controllerkern notwendig wäre, dann würden die Kosten eines Steuergeräts nahezu explodieren.

Ein technisches Problem der E/E-Architekturen (Elektrik-/Elektronik-Architekturen: Erstellen einer Struktur des Fahrzeuges hinsichtlich des Zusammenwirkens und der Vernetzung der E/E-Systeme, der Schnittstellen, der Umgebung, des Daten- und Energieflusses im E/E-System, der Daten und der Softwarearchitektur, so dass eine durchgängige und fahrzeugweite Architektur aller E/E-Systeme und E/E-Komponenten auf Hardware-, Software-, Bordnetz-, Leitungssatz- und Topologieebene entsteht) wird die Verarbeitung der großen Datenraten darstellen. Im Fehlerfall können dabei Datenmengen auftreten, die von der Firewall nicht mehr beherrscht werden können. Nur weil ein Controller eine 100Mbit/s-Schnittstelle hat, heißt das noch lange nicht, dass die Software (Firewall) auch diese Datenmengen (in Echtzeit) verarbeiten kann. Hier sind Techniken notwendig, um das Bordnetz sicherer zu machen, ohne dabei die Kosten exponentiell in die Höhe zu treiben.

Aus der EP 2892199A1 ist bekannt, in einem Kommunikationsnetzwerk für ein Fahrzeug mehrere Watchmen vorzusehen. Diese Watchmen überwachen und schützen jeweils einen Teil des Kommunikationsnetzwerks mit dem sie verbunden sind. Der Watchman muss daher selbst die gesamte Kommunikation überwachen und schützen, die über ihn stattfindet. Die Hardware des Watchman muss daher entsprechend leistungsfähig ausgestaltet sein.

Die Aufgabe der Erfindung ist es somit, ein Verfahren und eine Vorrichtung bereitzustellen, mittels welchem ein Fahrzeugnetzwerk sicherer gegenüber Fremdzugriffen ausgestaltet werden kann und mit dem gleichzeitig die Firewall entlastet werden kann.

Diese Aufgabe wird durch das Verfahren gemäß Anspruch 1 und durch die weiteren unabhängigen Ansprüche gelöst.

Das erfindungsgemäße Verfahren bezieht sich auf ein Kommunikationsnetzwerk für ein Kraftfahrzeug, wobei für eine Kommunikation in dem Kommunikationsnetzwerk eine Datenübertragung durchgeführt wird. In dem Kommunikationsnetzwerk sind dabei mindestens zwei Kommunikationsteilnehmer vorgesehen. Gegen einen Angriff auf das Kommunikationsnetzwerk sind Sicherheitsmaßnahmen vorgesehen. Die Durchführung der Sicherheitsmaßnahmen wird erfindungsgemäß auf mehrere Kommunikationsteilnehmer aufgeteilt.

Ein Angriff auf das Kommunikationsnetzwerk ist in diesem Zusammenhang als ein Angriff auf das Netzwerk zur Ausnutzung von Sicherheitslücken zu verstehen. Mit anderen Worten betrifft es einen Angriff eines Dritten (Cyberangriff / Hackerangriff), welcher sich mit seinem Angriff Zugang zu Informationen oder Kontrolle über Steuermechanismen/Regelmechanismen im Fahrzeug verschafft. Eine derartige Kontrollübernahme von Dritten kann sich im Automobil auf die Sicherheit (safety), insbesondere der Fahrzeuginsassen, auswirken und ist daher zu vermeiden. Dies kann durch die Erfindung erreicht werden.

Die Sicherheitsmaßnahmen können z.B. das Aufspüren und Abwehren bestimmter Angriffsarten (z.B. DoS-Attacke) sein. Durch die Verteilung der Durchführung der Sicherheitsmaßnahmen, z.B. so, dass verschiedene Kommunikationsteilnehmer verschiedene Arten von Angriffen filtern bzw. abwehren, ist vorteilhaft eine vollständige Abdeckung bzw. Abwehr vieler verschiedener möglicher Angriffe gegeben, ohne die Firewall mit zusätzlicher Hardware auszustatten und/oder zu überlasten. Somit werden vorteilhaft Kosten gespart. Zudem ist damit eine Abwehr von Angriffen in Echtzeit möglich. Ferner ist es durch die Erfindung möglich, schon bevor ein schadhaftes Datenpaket die Firewall erreicht, den Angriff von anderen Kommunikationsteilnehmern abzufangen.

Die Verteilung der Sicherheitsmechanismen kann allein zwischen den Kommunikationsteilnehmern vorgenommen werden oder zwischen den Kommunikationsteilnehmern und der Firewall. Beispielsweise werden besonders bevorzugt bestimmte Sicherheitsmechanismen von der Firewall durchgeführt, während andere Sicherheitsmechanismen durch ein oder mehrere der Kommunikationsteilnehmer durchgeführt werden bzw. auf ein oder mehrere Kommunikationsteilnehmer aufgeteilt sind.

Erfindungsgemäß sind die Kommunikationsteilnehmer zu Kommunikationspfaden zusammengefasst. Die Kommunikation findet in dem Kommunikationspfad mit den zugehörigen Kommunikationsteilnehmern statt.

In einer weiteren bevorzugten Weiterbildung der Erfindung findet die Verteilung der Sicherheitsmechanismen auf die Kommunikationsteilnehmer des jeweiligen für die Kommunikation vorgesehenen Kommunikationspfads statt. Die Kommunikationsteilnehmer umfassen besonders bevorzugt mindestens einen Sender und einen Empfänger, zwischen denen eine Kommunikation in Form einer Datenübertragung durchgeführt wird. Gemäß dieser Weiterbildung ist zumindest einer der Kommunikationsteilnehmer, also entweder der Sender oder der Empfänger im Automobil angeordnet. Der jeweils andere Kommunikationsteilnehmer kann ebenfalls im Automobil angeordnet sein, oder er ist ein externer Teilnehmer, der extern positioniert ist. Ein externer Teilnehmer kann z.B. ein extern angeordnetes Steuergerät oder eine Rechnerwolke ("Cloud") sein.

Erfindungsgemäß umfasst das Verfahren zudem die Ermittlung einer maximal möglichen Sicherheitsunterstützung für jeden Kommunikationsteilnehmer. Anders gesagt wird die Sicherheitsunterstützung ermittelt, die der jeweilige Kommunikationsteilnehmer maximal bereitstellen kann. Die Sicherheitsunterstützung betrifft dabei die Unterstützung durch den Kommunikationsteilnehmer zur Durchführung von Sicherheitsmaßnahmen. Besonders bevorzugt werden die ermittelten Informationen in einer Datenbank gespeichert.

Durch die Weiterbildung ist es möglich, die für eine Unterstützung der Firewall zur Verfügung stehenden Ressourcen zu ermitteln und die Verteilung der Sicherheitsmaßnahmen entsprechend vorzunehmen. Somit können die verfügbaren Ressourcen für die Verhinderung von Angriffen auf das Netzwerk optimal ausgenutzt werden.

In einer bevorzugten Weiterbildung der Erfindung umfasst das Verfahren die Ermittlung einer maximal möglichen Suchtiefe für jeden Kommunikationsteilnehmer. Die maximal mögliche Suchtiefe betrifft besonders bevorzugt die maximale Komplexität der Protokollschicht, in welcher der Kommunikationsteilnehmer suchen kann. Dabei ist die "Komplexität" der Protokollschicht derart zu verstehen, dass die "Komplexität" zunimmt mit steigender Nummer der Protokollschicht. In Schicht 1 (Bitübertragungsschicht) sind beispielsweise nur der Header und die Nutzdaten verfügbar, wobei die Nutzdaten die eigentlich zu übertragenden Daten sind und der Header Informationen zur Verarbeitung dieser Daten durch die jeweilig zugehörige Schicht (hier Schicht 1) enthält. Das ist die niedrigste, am wenigsten komplexe Schicht und erfordert am wenigsten Kapazitäten (Rechenaufwand). In Schicht 7 müssen hingegen zusätzlich sechs weitere Header durchsucht werden, was eine höhere Kapazität (Rechenaufwand) erfordert. Für jeden Kommunikationsteilnehmer wird somit bevorzugt ermittelt, bis zu welcher Schicht der Kommunikationsteilnehmer das Datenpaket durchsuchen kann.

Die maximale Suchtiefe betrifft alternativ oder zusätzlich zudem die Analysetiefe der einzelnen Schichten, d.h. wie tief (Bytetiefe) die einzelnen Schichten durchsucht werden, also wie viele Bytes "tief" in die jeweilige Schicht hineingeschaut werden kann.

Diese Informationen wird dann bevorzugt dafür verwendet, um die maximal mögliche Sicherheitsunterstützung der Kommunikationsteilnehmer zu ermitteln, da von der Suchtiefe abhängig ist, welche Angriffe durch die Kommunikationsteilnehmer erkannt werden können. Auch dadurch ist eine optimale Verteilung der Ressourcen möglich.

In einer bevorzugten Weiterbildung der Erfindung sind die Sicherheitsmechanismen als Filterregeln ausgebildet bzw. werden als Sicherheitsmechanismen Filterregeln verwendet. Filterregeln sind dabei bevorzugt Regeln, aufgrund derer entschieden wird, was mit einem jeweiligen Datenpaket passiert. Die Filterregeln liegen besonders bevorzugt als ein Paketfilter bzw. Netzwerkfilter vor und sind in dieser Form in den Kommunikationsteilnehmern und/oder in einer Firewall implementiert.

In einer bevorzugten Weiterbildung der Erfindung wird die Datenübertragung für die Kommunikation mittels eines Datenübertragungsprotokolls durchgeführt. Dieses weist mehrere Schichten auf. Vorteilhaft wird für das Verfahren eine Datenbank mit bekannten Datenübertragungsprotokollen und deren zugehörigen benötigten Analyseressourcen bereitgestellt. Für jedes bekannte Datenübertragungsprotokoll wird somit bereitgestellt, welche Schichten analysiert werden sollten und in welcher Byte-Tiefe, damit Angriffe sicher erkannt werden können. Die Datenbank wird bevorzugt dann herangezogen, wenn die zur Verfügung stehenden Ressourcen bei den Kommunikationsteilnehmern abgefragt werden und/oder wenn es um die Verteilung der Sicherheitsmaßnahmen geht. Bei unbekannten Datenübertragungsprotokollen wird besonders bevorzugt definiert, dass die maximalen Ressourcen notwendig sind, da bei unbekannten Protokollen unklar ist, wo Angriffe versteckt sein könnten. Es wird hier also vorgegeben, dass alle Schichten durchsucht werden sollten mit der maximalen Byte-Tiefe.

Insbesondere sind die Datenübertragungsprotokolle beispielsweise als Ethernet, FlexRay, VLAN (Virtual Local Area Network), IP (Internet Protocol), AVB (Audio/Video Bridging), TSN (Time Sensitive Networking) oder SOME/IP (Scalable service-Oriented MiddlewarE over IP) ausgebildet.

In einer weiteren bevorzugten Weiterbildung der Erfindung sind die Kommunikationsteilnehmer als Steuergeräte (ECU - Electronic Control Unit) und/oder Switche ausgebildet. Damit sind für die Verteilung der Sicherheitsmaßnahmen verschiedene Geräte im Fahrzeug nutzbar, die sowieso vorhanden sind. Dadurch ist es nicht notwendig, weitere, zusätzliche Hardware vorzusehen.

In einer bevorzugten Weiterbildung der Erfindung weist das Kommunikationsnetzwerk eine Firewall auf und die Konfiguration der Firewall wird an die Verteilung der Sicherheitsmechanismen angepasst. Werden Sicherheitsmechanismen durch Kommunikationsteilnehmer übernommen, kann die Konfiguration der Firewall derart geändert werden, dass die Firewall diese übernommenen Sicherheitsmechanismen nicht mehr durchführt. Damit wird die Firewall entlastet. Alternativ kann die Firewall auch weiterhin diese Sicherheitsmechanismen durchführen, so dass vorteilhaft eine Redundanz vorliegt.

Das erfindungsgemäße Verfahren wird bevorzugt einmalig am Bandende (nach der Beendigung der Produktion des Automobils), nach einem Software-Update, nach dem Bekanntwerden von Sicherheitslücken oder beim Austausch oder Update eines Teilnehmers des Kommunikationspfads durchgeführt. Somit können vorteilhaft auch Sicherheitslücken nach der Auslieferung an den Endkunden erkannt werden, z.B. wenn ein Austausch von Steuergeräten erfolgt oder ein Software-Update bereitgestellt wurde. Somit ist auch eine erhöhte Angriffssicherheit während des Betriebs des Fahrzeugs durch den Endkunden gegeben.

In einer bevorzugten Weiterbildung der Erfindung werden für die Abfrage nach Sicherheitsunterstützung und/oder für die Verteilung der Sicherheitsmechanismen Informationen zu verschiedenen Angriffsszenarien herangezogen. Diese Informationen sind bevorzugt ebenfalls in einer Datenbank hinterlegt, welche insbesondere in einem Speicher abgelegt ist und nicht ständig aktualisiert wird. Die Informationen betreffen besonders bevorzugt verschiedene mögliche Angriffsarten und die benötigten Sicherheitsmechanismen. Eine mögliche Angriffsart ist z.B. DoS ― Denial of Service, bei dem eine Überlastung durch einen Dritten herbeigeführt wird, welche zum Ausfall einer Funktion oder eines Dienstes oder auch einer Firewall oder ECU führt.

In einer bevorzugten Weiterbildung der Erfindung werden die Datenbanken in einem sicheren Speicherbereich abgelegt. Insbesondere ist dieser sichere Speicherbereich mit einer Verschlüsselung versehen und somit vor Angriffen geschützt. Der sichere Speicherbereich kann dabei z.B. auf einem zentralen Steuergerät angeordnet sein.

In einer bevorzugten Weiterbildung wird die Bewertung der Kommunikationsteilnehmer nach ihrer maximal möglichen Sicherheitsunterstützung mittels eines Algorithmus durchgeführt. Der Algorithmus kann bevorzugt anhand der maximal möglichen Suchtiefe auch Ressourcenklassen erstellen und die Kommunikationsteilnehmer den Ressourcenklassen zuordnen. Dafür bezieht der Algorithmus insbesondere eine oder mehrere Datenbanken zur maximal möglichen Suchtiefe, der Datenübertragungsprotokolle und/oder der Informationen zu verschiedenen Angriffsszenarien in die Auswertung mit ein.

Die Erfindung betrifft weiterhin eine elektronische Kontrolleinheit bzw. Steuereinheit für ein Kraftfahrzeugsteuergerät, welches zur Durchführung des Verfahrens ausgebildet ist.

In vorteilhafter Weise kann durch die Erfindung die Sicherheit eines Fahrzeugnetzwerks erhöht werden, insbesondere ohne finanziellen Mehraufwand. Mit der Nutzung von Ethernet oder anderen Datenübertragungssystemen (wie z.B. FlexRay) im Automobil sind u.a. Mechanismen notwendig, die sich einfache Techniken und gegebene Eigenschaften von Technologien zu Nutze machen, um auf teure Implementierungen und weitere zusätzliche Hardware verzichten zu können.

Weitere bevorzugte Ausführungsformen ergeben sich aus der nachfolgenden Beschreibung von Ausführungsbeispielen anhand von Figuren.

In schematischer Darstellung zeigen:
- Fig. 1: den Aufbau eines Kommunikationspakets bzw. Stapels,
- Fig. 2: ein exemplarisches Beispiel der Vernetzung des Fahrzeugnetzwerks mit dem Internet über einer Verbindungseinheit und einer zentralen Firewall,
- Fig. 3: ein exemplarisches Beispiel der Vernetzung des Fahrzeugnetzwerks mit dem Internet über mehrere Verbindungseinheiten und mehrere zentrale Firewalls,
- Fig. 4: ein Ausführungsbeispiel der Erfindung als Weiterbildung zu Fig. 3,
- Fig. 5: eine beispielhafte Ausgestaltung des erfindungsgemäßen Verfahren zur Ermittlung der maximal möglichen Suchtiefe,
- Fig. 6: eine beispielhafte Ausgestaltung einer Datenbank zu der ermittelten Suchtiefe,
- Fig. 7: eine beispielhafte Ausgestaltung des Verfahrens zur Zuteilung der Steuergeräte nach Sicherheitsunterstützung,
- Fig. 8: eine Gegenüberstimmung der Suchtiefe von einem Ethernet Switch und einer Firewall,
- Fig. 9: eine beispielhafte Ausführungsform des Verfahrens zur Verteilung der Suchtiefe,
- Fig. 10: eine beispielhaften Ablauf zur Verteilung der Sicherheitsmechanismen.

Um eine kurze und einfache Beschreibung der Ausführungsbeispiele zu ermöglichen, werden gleiche Elemente mit den gleichen Bezugszeichen versehen.

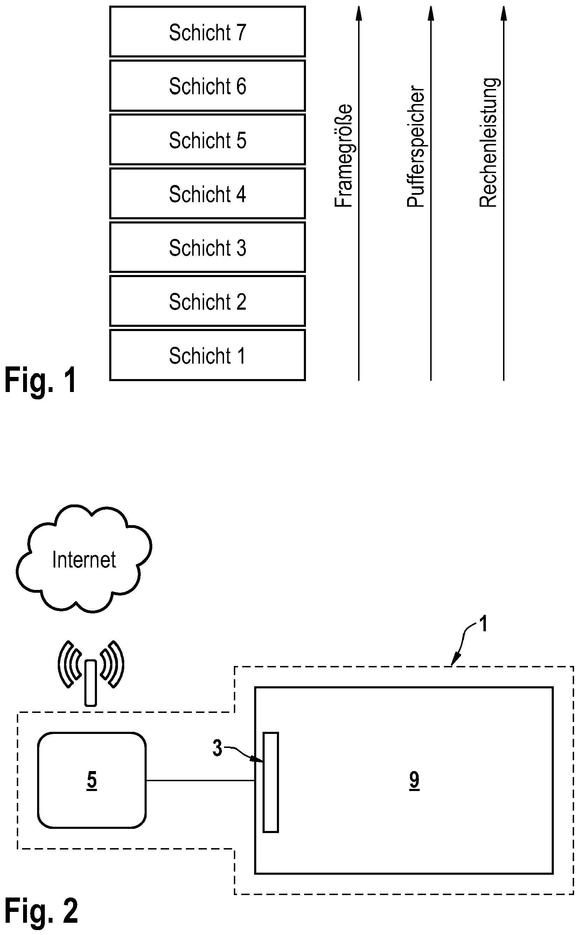

Fig. 1 zeigt exemplarisch den Aufbau eines Kommunikationsstapels. Der Kommunikationsstapel kann beispielgemäß nach dem OSI-Modell sieben Schichten aufweisen. Die Anforderungen an die Firewall zur Sicherung des Netzwerkes sind abhängig von der Kommunikationsschicht. Je höher die Schicht, auf der kommuniziert wird, desto größer ist die Frametiefe - umso mehr Speicher muss vorgehalten werden und umso mehr Rechenleistung ist erforderlich. Zusätzlich nimmt die Rechenleistung zu mit steigender Analysetiefe in jeder Schicht. Als Analysetiefe ist hier die Bytetiefe gemeint, mit welcher in eine Schicht hineingeschaut wird.

Fig. 1 zeigt somit die Veränderung der Komplexität, der Rechenleistung und des Speicherbedarfs in Relation zu der geprüften Kommunikationsschicht. Mit steigender Schicht (zunehmende Nummer der Schicht) steigt die Framegröße des Pakets. Damit nimmt auch der notwendige Pufferspeicher für die Zwischenspeicherung der Daten während einer Überprüfung zu. Ebenso steigt damit auch die erforderliche Rechenleistung an. Firewalls müssten, um zukünftige Datenpakete mit allen Schichten durchsuchen zu können, bessere bzw. zusätzliche Hardware erhalten, was Kosten generiert.

Fig. 2 zeigt ein exemplarisches Beispiel der Vernetzung eines Fahrzeugnetzwerks 1 mit dem Internet. Dabei weist das Fahrzeugnetzwerk 1 eine Verbindungseinheit 5 und ein restliches Fahrzeugnetzwerk 9 mit einer (zentralen) Firewall 3 auf. Das restliche Fahrzeugnetzwerk kann z.B. ein Steuergerät sein oder es mehrere Steuergeräte und Gateways aufweisen, die über CAN, LIN, FlexRay, MOST, LVDS, WLAN, Bluetooth oder Ethernet miteinander verbunden sind (nicht dargestellt). Das Netzwerk 1 ist über die Verbindungseinheit 5 ("Connectivity Unit") mit dem Internet verbunden. Beispielgemäß ist die Verbindung zwischen dem restlichen Netzwerk 9 und der Verbindungseinheit 5 als kabelgebundene Verbindung ausgebildet und zwischen der Verbindungseinheit 5 und dem Internet als drahtlose (Funk-) Verbindung.

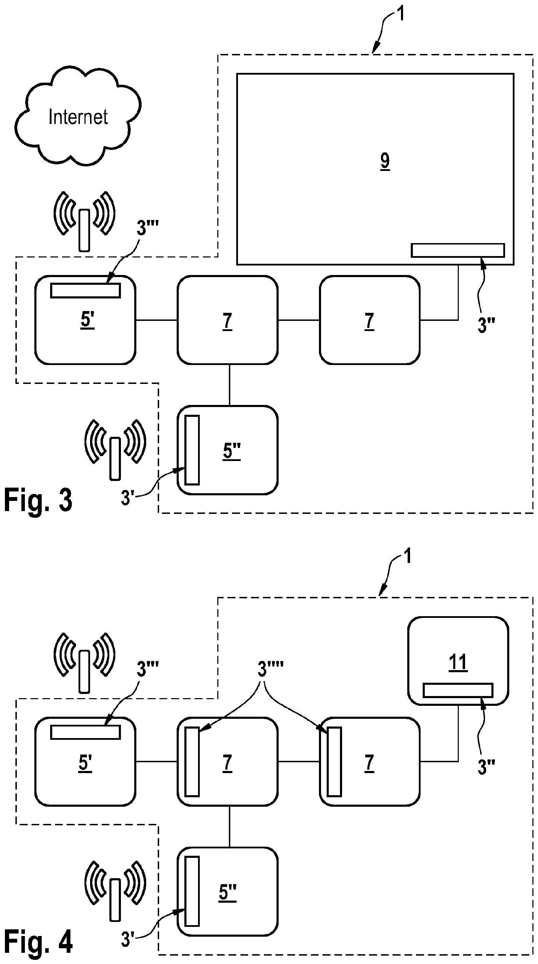

Fig. 3 zeigt eine komplexere Variante von Fig. 3, wobei in dem Fahrzeugnetzwerk 1 mehrere Firewalls 3',3" und mehrere Ethernet Switche 7 vorhanden sind. Eine Verbindungseinheit 5' und eine weitere Verbindungseinheit 5" sind ebenfalls im Fahrzeugnetzwerk 1 angeordnet. Weitere Einheiten können in dem als Block dargestellten restlichen Fahrzeugnetzwerk 9 vorgesehen sein. Das restliche Fahrzeugnetzwerk 9 sowie beide Verbindungseinheiten 5',5" weisen jeweils eigene Firewalls 3′,3ʺ,3‴ auf. Die Firewalls 3′,3ʺ,3‴ können z.B. als Controller ausgebildet sein, welche dafür konfiguriert sind, entsprechende Aufgaben wie die Durchführung von Sicherheitsmaßnahmen zu übernehmen.

Fig. 4 zeigt eine Weiterbildung von Fig. 3, wobei das restliche Fahrzeugnetzwerk 9 als Steuergerät (ECU) 11 mit Firewall 3" ausgebildet ist. Die Ethernet Switche 7 weisen jeweils zusätzlich eine Firewall 3"" auf. Diese kann beispielsweise dadurch gegeben sein, dass eine Mikrokontrollereinheit, insbesondere ASIC, des Switches 7 dementsprechend konfiguriert ist, also Aufgaben einer Firewall übernimmt. Beispielgemäß können die Firewalls 3ʺʺ eine Vorsortierung der Datenpakete vornehmen, welche dann durch die Firewalls 3ʺ und 3‴ (und ggf. 3') auf Angriffe gefiltert werden oder sie können einen Teil der Aufgaben der Firewalls 3ʺ, 3‴ (und ggf. 3') übernehmen und diese damit entlasten. Die Firewalls 3' und 3" können dabei als einfachere und/oder redundante Firewalls ausgebildet sein. Dadurch, dass mehrere Einheiten (5", 7, 11) an der Analyse mitwirken und sich so die Rechenlast der Untersuchung verteilt, muss nicht mehr eine einzige Firewall der Analyse durchführen.

Die einzelnen Einheiten im Netzwerk 1 können Kommunikationsteilnehmer sein. Die Verbindungseinheit 5" gehört zwar nicht mehr zu dem primären Kommunikationspfad, jedoch könnte auch diese in die Durchführung von Sicherheitsmechanismen eingebunden werden. Nach der Durchführung der Sicherheitsmaßnahmen müssten dann die Daten bzw. Ergebnisse zurück zum Kommunikationspfad gesendet werden.

Die Durchführung von Sicherheitsmaßnahmen wird verteilt auf die Kommunikationsteilnehmer. Dabei müssen nicht alle Firewalls oder alle Kommunikationsteilnehmer Sicherheitsmaßnahmen übernehmen. Bevorzugt erfolgt die Verteilung derart, dass eine optimale Ressourcenausnutzung gegeben ist. Insbesondere können auch Kommunikationsteilnehmer und/oder Firewalls als Redundanz arbeiten und somit Sicherheitsmaßnahmen übernehmen, welche ebenfalls von einer anderen Firewall oder einem anderen Kommunikationsteilnehmer durchgeführt werden. Damit ist eine höhere Sicherheit gegeben, da Fehler beim Feststellen von Angriffen reduziert werden können.

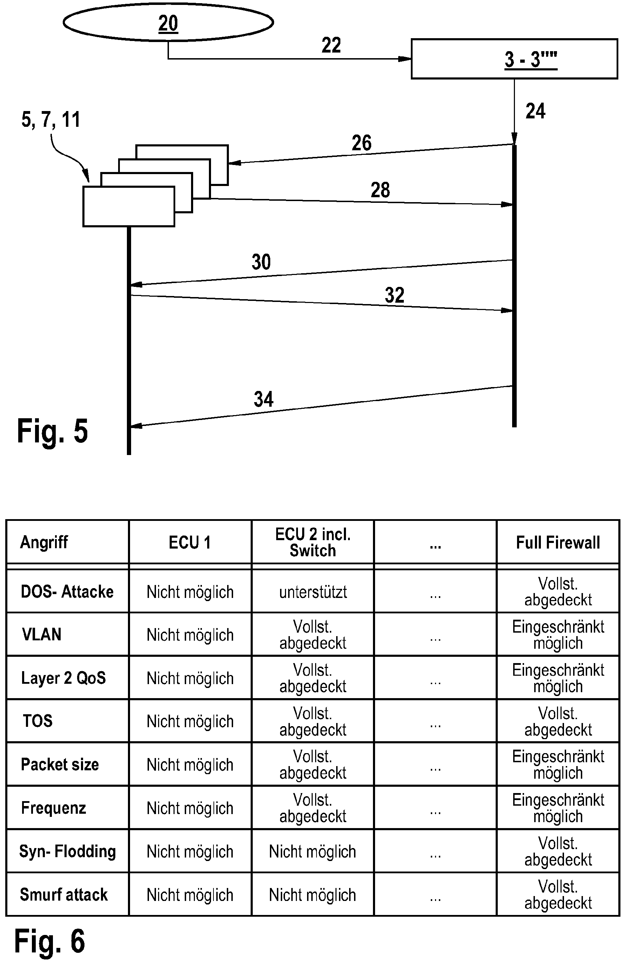

Fig. 5 zeigt ein mögliches Verfahren zum Ermitteln der maximal möglichen Suchtiefe der einzelnen Kommunikationsteilnehmer. Dabei wird nach dem Start 20 des Verfahrens zunächst der ausgewählte Kommunikationspfad bzw. die für die Kommunikation nötigen Kommunikationsanforderungen sowie die beteiligen Steuergeräte einer ausgewählten Firewall (z.B. 3-3"") übermittelt 22. Die Kommunikationsanforderungen können z.B. die Nachrichtenfrequenz, den Pakettyp bzw. Protokolltyp und das Sicherheitslevel umfassen. Die Firewall 3-3ʺʺ, alternativ auch eine andere Steuereinheit, berechnet die notwendigen Ressourcen für die Kommunikation 24 und speichert diese in einer Kommunikationsmatrix. Insbesondere werden die benötigten Ressourcen anhand des verwendeten Protokolltyps kategorisiert. Bekannte Protokolle und die dazugehörigen benötigten Ressourcen können als Datenbank bereitgestellt werden, auf die zurückgegriffen werden kann. Eine externe Kommunikation, bei der insbesondere ein neuer Protokolltyp verwendet wird, wird bevorzugt derart eingestuft, dass eine maximale Analyse stattfindet. D.h. es werden bevorzugt alle Protokollschichten mit der maximalen Byte-Analysetiefe untersucht, da bei unbekannten Protokollen nicht klar ist, wo im Protokoll Angriffe versteckt sein können.

Nach der Ermittlung der benötigten Ressourcen findet eine Abfrage von Informationen an die Steuergeräte 5,5′,5ʺ,7,11 statt 26,30. Es wird z.B. ermittelt, bis zu welcher Paketschicht eine Unterstützung durch die Steuergeräte 5,5′,5ʺ,7,11, möglich ist 26 und bis zu welcher Byte-Tiefe eine Unterstützung möglich ist 30. Somit wird ermittelt, wie die maximal mögliche Suchtiefe der Steuergeräte 5,5′,5ʺ,7,11 aussieht. Die Steuergeräte 5,5′,5ʺ,7,11 geben der Firewall 3-3"" entsprechende Rückmeldungen 28,32 auf die Anfrage. Die ermittelten Informationen werden bevorzugt in einer Datenbank, besonders bevorzugt in einem sicheren Speicherbereich, gesichert und es wird eine ressourcenoptimierte Verteilung der Arbeitslast ermittelt. Anschließend kann die Analyse durch die Steuergeräte 5,5′,5ʺ,7,11 aktiviert werden 34. Dabei werden die Steuergeräte 5,5′,5ʺ,7,11 und die Firewalls 3-3"" entsprechend der ermittelten Verteilung zur Abwehr der Angriffe konfiguriert.

Die Abfrage der Steuergeräte 5,5′,5ʺ,7,11 nach den unterstützten Schichten 26 kann z.B. schrittweise erfolgen. Nacheinander kann dabei eine Unterstützung der ersten bis zur maximalen Schicht abgefragt werden. Beispielsweise wird zunächst abgefragt, ob die erste Schicht unterstützt wird. Wenn ja, wird abgefragt, ob die zweite Schicht unterstützt wird usw. Dabei ist anzumerken, dass eine Abfrage auf die erste Schicht in der Praxis entfallen kann, da die erste Schicht als physikalische Basis immer analysierbar sein muss. Wird im Zuge der schrittweisen Abfrage ermittelt, dass eine bestimmte Schicht nicht mehr analysiert werden kann, kann daraus die Schlussfolgerung gezogen werden, dass die zuletzt untersuchte Schicht, die noch als unterstützt ermittelt wurde, die maximal mögliche unterstützte Schicht darstellt. Dieses Ergebnis kann dann beispielsweise in der Datenbank im Zusammenhang mit dem untersuchten Steuergerät gespeichert werden.

Fig. 6 zeigt eine mögliche Matrix einer Datenbank mit den ermittelten Informationen zu den einzelnen Kommunikationsteilnehmern, die z.B. Steuergeräte 5,5′,5ʺ,7,11 und/oder Firewalls 3-3"" sein können. Beispielgemäß kann in der Datenbank abgespeichert sein, ob die Steuergeräte 5,5′,5ʺ,7,11 und die Firewall 3-3ʺʺ bestimmte Angriffe identifizieren bzw. abwehren können. Jeder Angriff findet auf einer bestimmten Protokollschicht statt. Bei mehreren potentiellen Angriffsarten ist es daher wahrscheinlich, dass unterschiedliche Schichten betroffen sind. Jedes Steuergerät hat eine maximal mögliche Suchtiefe für die Datenprotokolle. Während ein erstes Steuergerät beispielsweise nur auf niedrigen Schichten suchen kann, ist ein zweites Steuergerät beispielsweise fähig, auch auf höheren Schichten zu suchen. Das zweite Steuergerät kann daher beispielsweise Angriffe auf den höheren Schichten abdecken und das erste Steuergerät Angriffe auf den niedrigeren Schichten. Auch die Firewall hat eine maximale Suchtiefe und kann bei Verteilung der Sicherheitsmechanismen auf die Steuergeräte beispielsweise so konfiguriert werden, dass sie die restlichen Schichten abdeckt, die nicht von den Steuergeräten übernommen werden können.

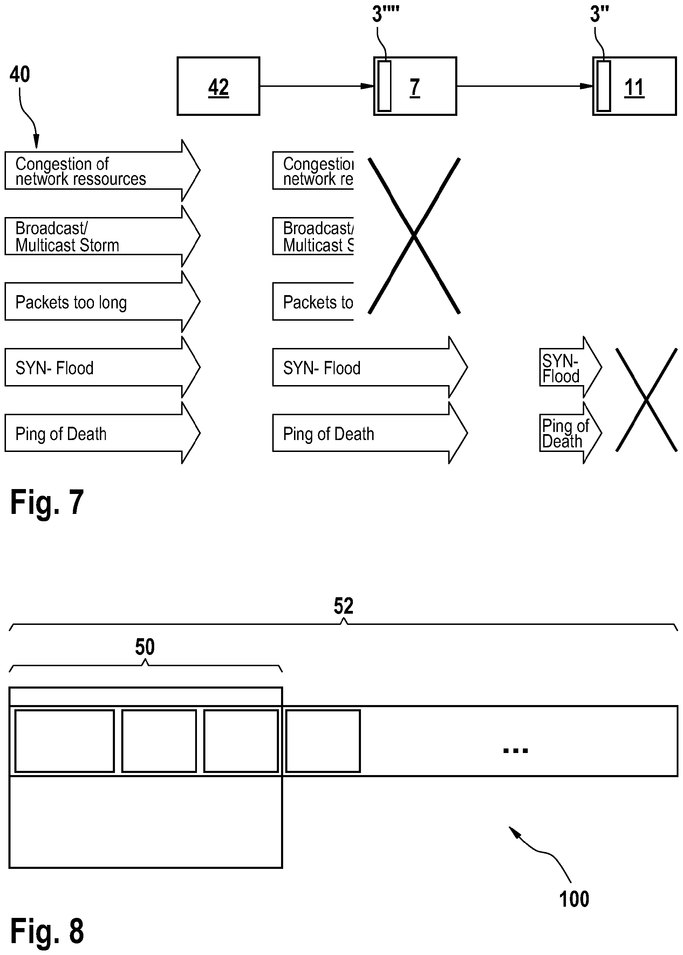

Die erfindungsgemäße Idee ist auch in Fig. 7 dargestellt. Auf der linken Seite der Figur sind die möglichen Angriffe 40 aufgeführt, die beispielsweise über eine Antenne 42 ins Netzwerk gelangen können. Als weitere Kommunikationsteilnehmer sind ein Switch 7 und eine ECU 11 vorgesehen, welche die Datenpakete erhalten sollen. Beispielgemäß sind als mögliche Angriffe 40 verschiedene Varianten der DoS (Denial of Service - Attacke) dargestellt, wie z.B. der "Ping of Death", eine "SYN-Flut" oder ein "Broadcast-Sturm". Die Angriffe werden beispielsgemäß von der Antenne 42 nicht bearbeitet. Eine erste Identifizierung von einem Teil der Angriffe wird vom Switch 7 übernommen. Die Angriffe 40 können damit weggefiltert bzw. herausgefiltert werden, so dass nur die restlichen, nicht vom Switch 7 übernommenen Angriffe 40 übrigbleiben. Die Informationen bzw. Datenpakete werden an die ECU 11 weitergegeben, welche die Identifizierung der verbleibenden Angriffe 40 übernimmt bzw. die Angriffe 40 abwehrt. Die Identifizierung bzw. Abwehr der Angriffe 40 kann als Sicherheitsmaßnahme bezeichnet werden. Die Sicherheitsmaßnahmen für die Vermeidung von Angriffen 40 auf das Netzwerk 1 werden somit im Netzwerk 1 verteilt durchgeführt. Dafür wird nach der Analyse der zur Verfügung stehenden Ressourcen (z.B. von Switch 7 und ECU 11) eine Zuteilung der Sicherheitsmaßnahmen vorgenommen. Vorteilhaft kann so eine große Bandbreite an Angriffen 40 abgewehrt werden, ohne dass neue Hardware zur Verfügung gestellt werden muss, welche alle Angriffe 40 erkennen muss. Durch die Verteilung der Durchführung der Sicherheitsmaßnahmen können somit Kosten gespart werden.

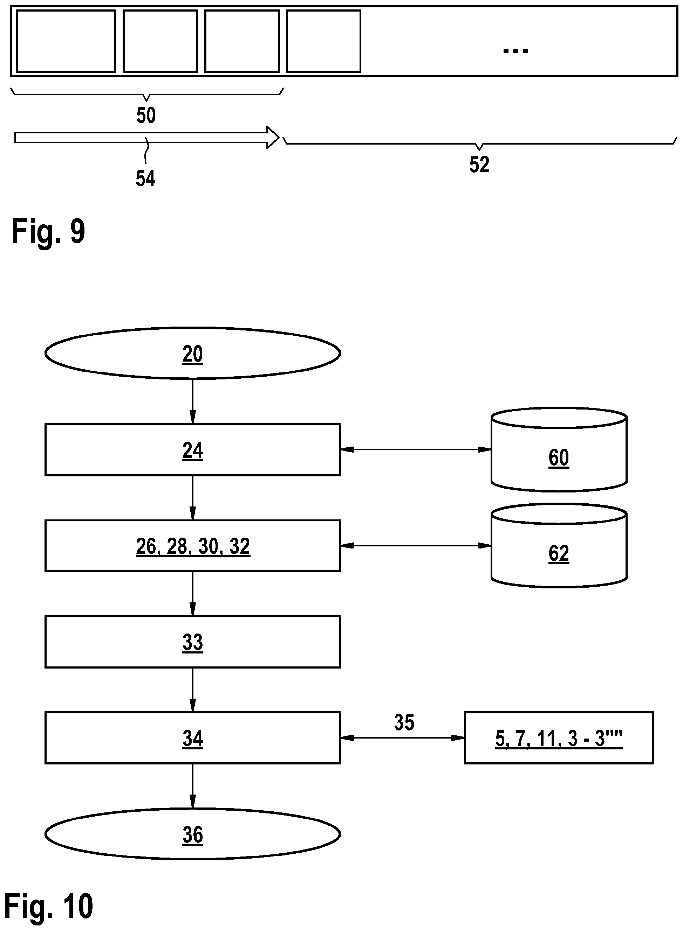

Fig. 8 zeigt beispielhaft ein Datenpaket, an welchem die Suchtiefe von einem Ethernet Switch 7 und einer Firewall 3-3ʺʺ dargestellt ist. Die verschiedenen Kästen stellen die Header und die Nutzdaten dar. Während der Ethernet Switch 7 nur die Daten (Kasten ganz links) und die ersten zwei Header/Schichten durchsuchen kann 50, ist es der Firewall 3-3"" möglich, alle Schichten des Datenpakets - mit z.B. sieben Schichten -, zu durchsuchen 52. Wenn Switch 7 und Firewall 3-3"" beide die Durchsuchung starten würden, gäbe es somit eine Redundanz im Bereich der ersten beiden Schichten 50. Diese Redundanz kann entweder zur Fehleranalyse verwendet werden durch Abgleich der Ergebnisse von Switch 7 und Firewall 3-3"" in diesem Bereich, oder die Firewall 3-3"" durchsucht nur die Header, welche nicht durch den Switch 7 durchsucht werden können (Fig. 9). Im letzten Fall findet also eine Verschiebung 54 der Analysebereiche für die Firewall 3-3"" statt. Diese muss demnach nicht mehr die Schichten durchsuchen, welche auch von dem Switch 7 analysiert werden können. In diesem Fall stehen der Firewall 3-3"" vorteilhaft Ressourcen für weitere Aufgaben zur Verfügung. Die zu analysierenden Bereiche können natürlich ebenfalls auf weitere Switche 7 oder Steuergeräte 11 aufgeteilt werden, so dass der Anteil für die Firewall 3-3"" noch geringer wird.

Fig. 10 zeigt eine alternative Darstellung der Gesamtansicht des Verfahrens gemäß Fig. 5 zur Verteilung der Sicherheitsmaßnahmen bei Verwendung eines bestimmten Datenübertragungsprotokolls. Nach Start des Verfahrens 20 werden die notwendigen Analyseressourcen ermittelt 22, z.B. durch eine Steuereinheit oder Firewall, die dann in einer Kommunikationsmatrix gespeichert werden. Sodann wird ermittelt, welche Schichten und welche Analysetiefe die Steuereinheiten oder Firewalls zur Verfügung stellen können. Das Ergebnis wird in einer Sicherheitsdatenbank 62 abgelegt. Anschließend wird bestimmt, wie die Verteilung der Sicherheitsmaßnahmen stattfinden soll 33. Danach kann die ermittelte Verteilung in die Praxis umgesetzt werden, wozu die Steuereinheiten und Firewalls entsprechend konfiguriert werden 34. Dafür wird mit den Steuereinheiten und Firewalls kommuniziert 35. Mittels der angepassten Konfigurationen werden Angriffe erfolgreich auf verteilte Weise entdeckt und abgeblockt 36.

Weitere Informationen zu der Erfindung:
Die Erfindung schlägt ein neuartiges Verfahren vor, um Filterregeln (ein Grundprinzip einer Firewall) im Netzwerk zu verteilen und bekannt zu machen. Weiterhin stellt die Erfindung Verfahren dar, um das Automotive-Netzwerk und deren Komponenten danach abzufragen und zu konfigurieren. Die Erfindung definiert dabei Mechanismen, um für potentielle Angriffsfunktionen die richtige Securityplattform frühzeitig auszuwählen; siehe hierzu in Figur 5 für ein exemplarisches Beispiel.

Die Erfindung schlägt ein Verfahren vor, das die Sicherheitsfähigkeiten und - möglichkeiten über eine Schnittstelle im Netz konfiguriert und verwertbar macht. Somit wird erkennbar, welche Sicherheitsmechanismen mehrfach abgedeckt, welche gar nicht abgedeckt und auf welche verzichtet werden kann. Durch eine so entstehende Security-Matrix lässt sich zum einen einfach darstellen, welche Art von Security umgesetzt werden kann und zum anderen auch das Level an Sicherheit, das mit den jeweiligen Steuergeräten darstellbar ist. Durch die Verfahren der Erfindung wird erstmals klar dargestellt, wie die Firewall entlastet werden kann und wo Rechenleistung ausgelagert werden kann.

Durch dieses Verfahren kann das ganze Netzwerk im Hinblick auf Security (Angriffe von Außen) viel einfacher geprüft und getestet werden.

Die Erfindung schlägt vor, den Standard Ethernet TSN und dabei im speziellen den Substandard IEEE802.1Qci Ingress Policing und Filtering zum Zwecke der Fahrzeugsicherheit einzusetzen. Der Standard und dessen Fähigkeiten können für den Automobilbereich von entscheidender Wichtigkeit werden, da zum einen diese Funktionen in Hardware umgesetzt werden, und somit keine Rechenleistung in der Software benötigen und zum anderen voraussichtlich in jedem zukünftigen Automobil derartige Komponenten enthalten sein werden.

Der Kern und die Neuwertigkeit der Erfindung ist es, dass zum einen die Sicherheit des Fahrzeugnetzwerks erhöht wird (bei gleichen Kosten) und zum anderen eine Redundanz für Sicherheitsmechanismen geschaffen wird. Mit dem Einzug von Ethernet sind u.a. auch Mechanismen notwendig, die sich einfache Techniken und gegebene Eigenschaften von Technologien zu Nutze machen, um auf teure Implementierungen und weitere zusätzliche Hardware verzichten zu können.

Die Erfindung hat den Vorteil, dass die neuen Technologien wie Ethernet oder IP besser beherrscht werden können. Die neuen Technologien sind im Automobil nicht mehr aufzuhalten. Typische Techniken aus der IT können nicht alle übernommen werden. Zum Bespiel kann die Verschlüsslung nicht endlich tief sein (128bit), da die notwendige Rechendauer typischerweise im Sekundenbereich liegt. Hier können die Anforderungen im Automobil nicht gerecht werden.

Bei einem Fehler auf einem CAN oder LIN sind die Controller (inkl. Firewall) aktuell zwar in der Lage, die Paketflut zu beherrschen, wenn diese bei 100% arbeiten. Mit einem 100Mbit/s Ethernet oder gar einem 1000Mbit/s Ethernet ist dies nicht mehr möglich (unabhängig davon, ob die Controller eine derartige Schnittstelle besitzen). Die Firewall kann durch die Erfindung zugesichert arbeiten und wird keiner Überlast ausgesetzt.

Die Hardwareanforderungen an die Firewall müssen somit nicht angehoben werden. Zusätzliche Controller können so eingespart werden bei gleichbleibender Einhaltung der Sicherheitsleistung. Daraus ergibt sich eine Kostenersparnis durch Reduzierung der notwendigen Rechenleistung der Firewall.

Durch die Verteilung der Sicherheitsmechanismen und ein redundante Abarbeitung bzw. Berechnung einiger Mechanismen können zudem Einfachfehler umgangen werden. Durch die mehrfache Integration der Sicherheitsfunktionen im Bordnetz kann so schon vor der eigentlichen Firewall ein Angriff/Fehler erkannt werden und schneller Gegenmaßnahmen eingeleitet werden.

Dies zeigt auf, dass keine Komponente alleine die Security in einem Bordnetz (unter Betrachtung günstiger Gesamtkosten) beherrschen kann. Eine Firewall kann zwar prinzipiell fast alles abdecken, braucht jedoch eine sehr hohe Performance dadurch, um dies in Echtzeit zu tun. Ein Switch kann viele dieser Funktionen schon auf unterer Schicht abdecken und durch seine eingebauten HWunterstützenden Methoden ohne zusätzliche Komponenten wie Speicher oder CPUs auskommen. Die hierfür für das System erlangte Unterstützung macht nicht nur das Gesamtkonzept redundanter und sicherer, sondern auch die Komplexität der Firewall(s) einfacher.

Nach Übermittlung des Kommunikationspfades (dynamisch im System, bei Implementierung der Firewall mithilfe der DBC, Fibex-Dateien, oder bei der Bandendeprogrammierung) berechnet die Firewall die notwendigen Ressourcen zur Absicherung der eintreffenden Nachrichten. Pakettyp, Paketlänge, Protokoll und Nachrichtenfrequenz beeinflussen direkt die dafür notwendige Rechenkapazität und Speicher. Schon heute wird eine einzige CPU nur für die Deep Packet Inspection zur Verfügung gestellt. Die Erfindung schlägt vor, dass die Firewall Sicherheitsmechanismen im Netzwerk auslagert bzw. redundant zur Verfügung stellt. Dazu werden beim Systemdesign, Updates oder bei der Implementierung die Ethernet-Switches über ein Service-Discovery Verfahren über Ihre Funktionen abgefragt. Ziel der Abfrage ist die Erkenntnis der Auslagerung der Deep Packet Inspection, was hohe Rechenleistung erfordert und teilweise schon ausgelagert werden kann.

Die verschiedenen Angriffstechniken werden dadurch vorteilhaft nicht erst bei der Firewall gestoppt, sondern können durch die Steuergeräte noch vor der eigentlichen Firewall und dem Empfänger bereits teilweise beseitigt werden. Nach Kategorisierung der Sicherheitsunterstützung ist das System (die Firewall) in der Lage, den oder die Kommunikationspfade abzusichern und die Sicherheitsmechanismen zuzuteilen.

Eine weitere durch die Erfindung geschaffene Möglichkeit ist die Optimierung der Firewall. Durch Erkennung der Suchtiefe der ECUs, bzw. Switche kann die Firewall die Rechenleistung für andere Untersuchungen nutzen und hiermit Echtzeituntersuchungen durchführen. Da nicht mehr der ganze Frame durchsucht werden muss, spart dies Speicher und Rechenleistung.

## Patentansprüche

1. Verfahren für ein Kommunikationsnetzwerk (1) in einem Kraftfahrzeug, wobei für eine Kommunikation in dem Kommunikationsnetzwerk (1) eine Datenübertragung durchgeführt wird und in dem Kommunikationsnetzwerk (1) mindestens zwei Kommunikationsteilnehmer (5,5ʺ,7,9,11) vorgesehen sind die zu Kommunikationspfaden zusammengefasst sind, wobei die Kommunikation in dem Kommunikationspfad mit den zugehörigen Kommunikationsteilnehmern stattfindet, und wobei das Kommunikationsnetzwerk (1) mindestens eine Firewall (3,3', 3"', 3"") zur Abwehr von Angriffen auf das Kommunikationsnetzwerk (1) aufweist, **dadurch gekennzeichnet, dass** das Verfahren folgende Verfahrensschritte umfasst:
- Ermittlung (26, 28, 30, 32) einer maximal möglichen Sicherheitsunterstützung für jeden Kommunikationsteilnehmer (5,5ʺ,7,9,11), wobei die Sicherheitsunterstützung ermittelt wird, die der jeweilige Kommunikationsteilnehmer maximal zur Unterstützung der mindestens einen Firewall (3,3', 3"', 3"") bereitstellen kann,
- Verteilung von zumindest einem Teil der Durchführung von Sicherheitsmaßnahmen gegen einen Angriff auf das Kommunikationsnetzwerk (1) auf mehrere Kommunikationsteilnehmer (5,5",7,9,11) basierend auf den maximal möglichen Sicherheitsunterstützungen der Kommunikationsteilnehmer (5,5ʺ,7,9,11), und
- Anpassung (34) der Konfiguration der mindestens einen Firewall (3, 3', 3‴, 3ʺʺ) an die Verteilung der Sicherheitsmaßnahmen, so dass die Firewall (3, 3', 3‴, 3ʺʺ) den auf die mehreren Kommunikationsteilnehmer (5, 5ʺ, 7 ,9 , 11) verteilten Teil der Durchführung der Sicherheitsmaßnahmen nicht mehr durchführt.

2. Verfahren nach Anspruch 1, wobei das Verfahren folgenden weiteren Schritt umfasst:
- Ermittlung der maximal möglichen Suchtiefe (26, 28, 30, 32) der Kommunikationsteilnehmer (5,5",7,9,11), wobei
die maximal mögliche Suchtiefe für die Ermittlung der maximal möglichen Sicherheitsunterstützung der Kommunikationsteilnehmer (5,5",7,9,11) herangezogen wird.

3. Verfahren nach einem der Ansprüche 1 bis 2, wobei als Sicherheitsmaßnahmen Filterregeln vorgesehen werden.

4. Verfahren nach Anspruch 3, wobei die Kommunikation mittels eines Datenübertragungsprotokolls durchgeführt wird, welches mehrere Schichten aufweist, wobei für die maximal mögliche Suchtiefe die maximal durch den jeweiligen Kommunikationsteilnehmer (5,5",7,9,11) analysierbare Schicht (26, 28) und/oder die maximal durch den jeweiligen Kommunikationsteilnehmer (5,5",7,9,11) analysierbare Byte-Tiefe jeder Schicht (30,32) ermittelt wird.

5. Verfahren nach einem der vorhergehenden Ansprüche, wobei als Kommunikationsteilnehmer (5,5",7,9,11) mindestens ein Steuergerät (11) und/oder mindestens ein Switch (7) vorgesehen wird.

6. Verfahren nach einem der vorhergehenden Ansprüche, wobei das Verfahren einmalig am Bandende, nach einem Software-Update, nach dem Bekanntwerden von Sicherheitslücken oder beim Austausch oder Update eines Kommunikationsteilnehmers durchgeführt wird.

7. Kraftfahrzeugsteuergerät, **dadurch gekennzeichnet, dass** das Kraftfahrzeugsteuergerät ausgebildet ist, um das Verfahren nach einem der Ansprüche 1 bis 7 durchzuführen.

## Claims

1. Method for a communication network (1) in a motor vehicle, wherein a communication in the communication network (1) involves a data transmission being performed and the communication network (1) has provision for at least two communication subscribers (5,5ʺ,7,9,11) that are combined to form communication paths, wherein the communication in the communication path takes place with the associated communication subscribers, and wherein the communication network (1) has at least one firewall (3,3′,3‴,3ʺʺ) for defending against attacks on the communication network (1), **characterized in that**
the method comprises the following method steps:
- ascertaining (26, 28, 30, 32) a maximum possible security assistance for each communication subscriber (5,5ʺ,7,9,11), wherein the maximum security assistance that the respective communication subscriber can provide to assist the at least one firewall (3,3′,3‴,3ʺʺ) is ascertained,
- distributing at least a part of the performance of security measures against an attack on the communication network (1) over multiple communication subscribers (5,5ʺ,7,9,11) based on the maximum possible security assistances of the communication subscribers (5,5ʺ,7,9,11), and
- matching (34) the configuration of the at least one firewall (3,3′,3‴,3ʺʺ) to the distribution of the security measures, so that the firewall (3,3′,3‴,3ʺʺ) no longer performs that part of the performance of the security measures that is distributed over the multiple communication subscribers (5,5ʺ,7,9,11) .

2. Method according to Claim 1, wherein the method comprises the following further step:
- ascertaining the maximum possible search depth (26, 28, 30, 32) of the communication subscribers (5,5ʺ,7,9,11), wherein
the maximum possible search depth is used for ascertaining the maximum possible security assistance of the communication subscribers (5,5ʺ,7,9,11).

3. Method according to either of Claims 1 and 2, wherein the security measures provided for are filter rules.

4. Method according to Claim 3, wherein the communication is performed by means of a data transmission protocol that has multiple layers, wherein for the maximum possible search depth the maximum layer (26, 28) analysable by the respective communication subscriber (5,5ʺ,7,9,11) and/or the maximum byte depth, of each layer (30, 32), analysable by the respective communication subscriber (5,5ʺ,7,9,11) is ascertained.

5. Method according to one of the preceding claims, wherein the communication subscriber (5,5ʺ,7,9,11) provided for is at least one control device (11) and/or at least one switch (7).

6. Method according to one of the preceding claims, wherein the method is carried out once at the end of production, after a software update, after the revelation of security gaps or when replacing or updating a communication subscriber.

7. Motor vehicle control device, **characterized in that** the motor vehicle control device is designed to carry out the method according to one of Claims 1 to 7.

## Revendications

1. Procédé pour un réseau de communication (1) dans un véhicule automobile, une transmission de données étant effectuée pour une communication dans le réseau de communication (1) et au moins deux participants à la communication (5, 5ʺ, 7, 9, 11) étant présents dans le réseau de communication (1), lesquels sont regroupés en chemins de communication, la communication dans le chemin de communication ayant lieu avec les participants à la communication associés, et le réseau de communication (1) possédant au moins un pare-feu (3, 3', 3‴, 3ʺʺ) destiné à la protection contre les attaques sur le réseau de communication (1), **caractérisé en ce que** le procédé comprend les étapes suivantes :
- détermination (26, 28, 30, 32) d'une assistance de sécurité maximale possible pour chaque participant à la communication (5, 5ʺ, 7, 9, 11), l'assistance de sécurité déterminée étant celle que le participant à la communication respectif peut fournir au maximum en vue d'assister l'au moins un pare-feu (3, 3', 3‴, 3ʺʺ),
- distribution d'au moins une partie de la réalisation de mesures de sécurité contre une attaque sur le réseau de communication (1) sur plusieurs participants à la communication (5, 5ʺ, 7, 9, 11) en se basant sur les assistances à la sécurité maximales possibles des participants à la communication (5, 5ʺ, 7, 9, 11), et
- adaptation (34) de la configuration de l'au moins un pare-feu (3, 3', 3‴, 3ʺʺ) à la distribution des mesures de sécurité, de sorte que le pare-feu (3, 3', 3‴, 3ʺʺ) ne réalise plus la partie de la réalisation de mesures de sécurité qui est distribuée sur les plusieurs participants à la communication (5, 5ʺ, 7, 9, 11) .

2. Procédé selon la revendication 1, le procédé comprend l'étape supplémentaire suivante :
- détermination de la profondeur de recherche (26, 28, 30, 32) maximale possible du participant à la communication (5, 5ʺ, 7, 9, 11), la profondeur de recherche maximale possible étant utilisée pour la détermination de l'assistance de sécurité maximale possible du participant à la communication (5, 5ʺ, 7, 9, 11) .

3. Procédé selon l'une des revendications 1 à 2, des règles de filtrage étant prévues en tant que mesures de sécurité.

4. Procédé selon la revendication 3, la communication étant effectuée au moyen d'un protocole de transmission de données qui possède plusieurs couches, la couche (26, 28) maximale pouvant être analysée par le participant à la communication (5, 5ʺ, 7, 9, 11) respectif et/ou la profondeur d'octet de chaque couche (30, 32) maximale pouvant être analysée par le participant à la communication (5, 5ʺ, 7, 9, 11) respectif étant déterminée pour la profondeur de recherche maximale possible.

5. Procédé selon l'une des revendications précédentes, le participant à la communication (5, 5ʺ, 7, 9, 11) présent étant au moins un contrôleur (11) et/ou au moins un commutateur (7).

6. Procédé selon l'une des revendications précédentes, le procédé étant mis en œuvre une fois en fin de bande, après une mise à jour de logiciel, après la découverte de lacunes de sécurité ou lors du remplacement ou de la mise à jour d'un partenaire de communication.

7. Contrôleur de véhicule, **caractérisé en ce que** le contrôleur de véhicule est configuré pour mettre en œuvre un procédé selon l'une des revendications 1 à 7.
